# EUROPEAN PATENT SPECIFICATION

(11) **EP 4 214 337 B1**
(45) Date of publication and mention of the grant of the patent: **13.11.2024**
(21) Application number: 20775418.5
(22) Date of filing: 15.09.2020
(51) Int. Cl.: C21B 5/00, C21B 7/16, F27B 1/16, F27D 3/16

(54) **DEVICE TO INJECT A REDUCING GAS INTO A SHAFT FURNACE**
VORRICHTUNG ZUM EINBLASEN EINES REDUKTIONSGASES IN EINEN SCHACHTOFEN
DISPOSITIF POUR INJECTER UN GAZ RÉDUCTEUR DANS UN FOUR À CUVE

(43) Date of publication of application: 26.07.2023
(73) Proprietor: ArcelorMittal, 1160 Luxembourg (LU)
(72) Inventor: IZARD, Edouard, 57070 Saint Julien Les Metz (FR); SERT, Dominique, 57645 Montoy Flanville (FR); DAULMERIE, Jérôme, 59381 Dunkerque (FR)
(74) Representative: Lavoix
(86) International application number: PCT/IB2020/058563
(87) International publication number: WO 2022/058771

(56) References cited:
- WO-A1-2013/168784
- JP-A- H05 171 236
- US-A- 4 572 487
- US-A1- 2010 032 020

## Description

The invention is related to a device for injection of a reducing gas into a shaft furnace.

In blast furnaces, the conversion of the iron-containing charge (sinter, pellets and iron ore) to cast iron, or hot metal, is conventionally carried out by reduction of the iron oxides by a reducing gas (in particular containing CO, H2 and N2), which is formed by combustion of coke at the tuyeres located in the bottom part of the blast furnace where air preheated to a temperature between 1000° C. and 1300° C., called hot blast, is injected.

In order to increase the productivity and reduce the costs, auxiliary fuels are also injected at the tuyeres, such as coal in pulverized form, fuel oil, natural gas or other fuels, combined with oxygen enrichment of the hot blast.

The gas recovered in the upper part of the blast furnace, called top gas, mainly consists of CO, CO2, H2 and N2 in respective proportions of 20-28%v, 17-25%v, 1-5%v and 48-55%v. Despite partial use of this gas as fuel in other plants, such as power plants, blast furnace remains a significant producer of CO2.

In view of the considerable increase in the concentration of CO2 in the atmosphere since the beginning of the last century and the subsequent greenhouse effect, it is essential to reduce emissions of CO2 where it is produced in a large quantity, and therefore in particular at blast furnaces.

For this purpose, during the last 50 years, the consumption of reducing agents in the blast furnace has been reduced by half so that, at present, in blast furnaces of conventional configuration, the consumption of carbon has reached a low limit linked to the laws of thermodynamics.

One known way of additionally reducing CO2 emissions is to reintroduce top gases that are purified of CO2 and that are rich in CO into the blast furnace, said blast furnaces are known as TGRBF (Top-Gas Recycling Blast Furnaces). The use of CO-rich gas as a reducing agent thus makes it possible to reduce the coke consumption and therefore the CO2 emissions. This injection may be done at two levels, at the classical tuyere level, in replacement of hot blast and in the reduction zone of the blast furnace, for example in the lower part of the stack ok the blast furnace.

Injection at the tuyere level may be performed at the location of the existing equipment. However, in current practice there is no injection at the reduction zone level and new equipment must thus be installed. Classical hot blast tuyere are complex and heavy equipment which cannot be easily installed as such at this level. Patent documents US 4 572 487 A, WO 2013/168784 A1, US 2010/032020 A1 and JP H05 171 236 A relate to a device to inject a reducing gas into a shaft furnace.

There is so a need for a device allowing injection of reducing gas which is simple and easy to implement.

This problem is solved by a device according to the invention as disclosed in appended claim 1.

The device of the invention may also comprise the following optional characteristics considered separately or according to all possible technical combinations:
- a refractory layer is located between the external and the internal casings,
- the internal steel casing is made of stainless steel,
- the device does not comprise any cooling system.
- the shaft furnace is a blast furnace,
- the device is bolted to the shaft furnace,
- the device further comprises reinforcing plates to support the internal casing,
- the internal casing is designed so that injection of the reducing gas inside the shaft furnace is performed downwards,
- the internal casing is designed so that injection of the reducing gas inside the shaft furnace is performed at an angle α with the perpendicular to the shaft furnace internal wall comprised between 0 and 30°,
- the device comprises a stone box in the upper part of the front face,
- the front face of the external casing is composed of an upper part and of a lower part, the lower part is in recess from the upper part and the gas injection outlet is provided in the lower part of the front face.
- the front face of the external casing is composed of an upper part and of a lower part, the lower part being inwardly chamfered from the upper par and the gas injection outlet being provided in the lower part of the front face.

Other characteristics and advantages of the invention will emerge clearly from the description of it that is given below by way of an indication and which is in no way restrictive, with reference to the appended figures in which:
- Figure 1 illustrates a side view of a blast furnace equipped with reducing gas injection devices
- Figure 2 illustrates a top view of a blast furnace with reducing gas injection
- Figure 3 illustrates an injection device according to a first embodiment of the invention
- Figure 4 illustrates an injection device according to a second embodiment of the invention
- Figure 5 illustrates an injection device according to a third embodiment of the invention
- Figure 6 illustrates an injection device according to a fourth embodiment of the invention

Elements in the figures are for illustration and may not have been drawn to scale. Same references are used for same elements from one figure to another.

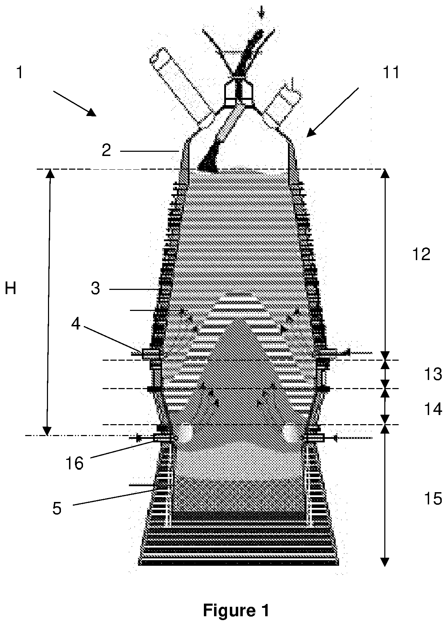

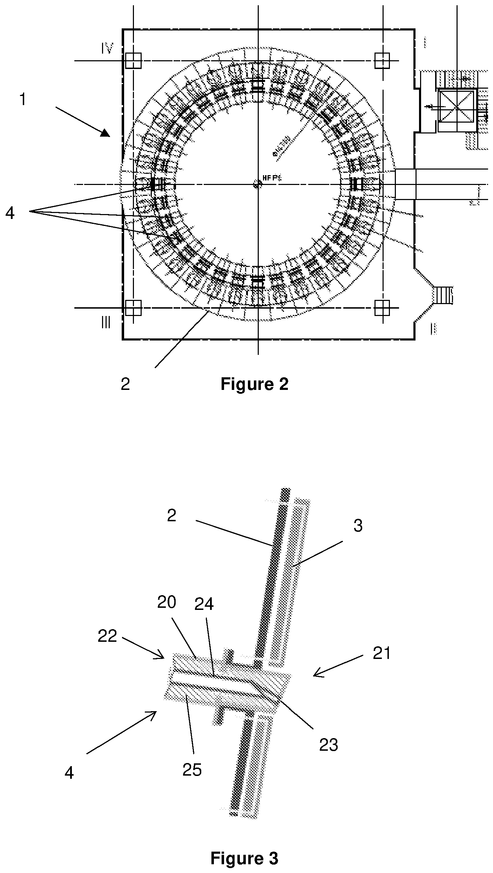

Figure 1 is a side view of a blast furnace according to the invention. The blast furnace 1, comprises, starting from the top, a throat 11 wherein materials are loaded and gas exhaust, a stack (also called shaft) 12, a belly 13, a bosh 14 and a hearth 15. The materials loaded are mainly iron-bearing materials such as sinter, pellets or iron ore and carbon-bearing materials such as coke. The hot blast injection necessary to carbon combustion and thus iron reduction is performed by tuyeres 16 located between the bosh 14 and the hearth 15. In terms of structure, the blast furnace has an external wall, or shell 2, this shell 2 being covered, on the inside of the blast furnace, by a refractory lining and staves 3, as illustrated in figure 3, forming an internal wall 5. To reduce consumption of coke, which is the main carbon provider for iron reduction, it has been envisaged to inject a reducing gas in the blast furnace in addition to the hot blast. This reducing gas injection is performed in the stack of the blast furnace, preferentially in the lower part of the stack 12, for example just above the belly 13.

In a preferred embodiment the reducing gas injection is performed at a distance from the classical tuyere level, comprised between 20% and 70%, preferentially between 30 and 60% of the working height H of the furnace. The working height H of a blast furnace is the distance between the level of injection of hot blast through classical tuyeres and the zero level of charging, as illustrated in figure 1.

The injection is performed through several injection outlets 4 around the circumference of the furnace, as illustrated in figure 2, which is a top view of the blast furnace 1 at the level of injection of the reducing gas. In a preferred embodiment there are as many injection outlets as staves forming the internal wall 2. Between 200 and 700Nm³ of reducing gas are injected per tons of hot metal in the blast furnace.

Figures 3 to 6 illustrate an injection device 4 according to different embodiments of the invention. In all embodiments the injection device 4 comprises an external casing 20 having a front face 21 and a rear face 22. The front face 21 is the face located inside the furnace and is provided with an outlet 23 for injecting the reducing gas into the furnace. The injection device 4 further comprises an internal casing 24 located inside the external casing 20 and made of a steel able to resist to a temperature up to 1200°C, preferably of stainless steel. This internal casing 24 has an opening matching the gas injection outlet 23 of the front face 21 of the external casing 20. A refractory layer 25 may furthermore be provided between the external 20 and the internal casing 24. The internal casing 24 is able to transport the reducing gas, having a temperature comprised between 800°C and 1200°C, up to the gas injection outlet 23 so that said reducing gas is injected into the blast furnace 1. The internal casing 24 and the gas injection outlet 23 are designed so that the injection of the reducing gas inside the blast furnace stack is performed downwards and preferably at an angle α with the perpendicular to the internal wall comprised between 0 and 30°. The diameter of the internal casing 24 is chosen to fulfil required speed injection in the blast furnace. In a preferred embodiment this speed is comprised between 75 and 200m/s. In another embodiment it is inferior to 60m/s. The refractory layer 25 allows to mitigate the variation of temperature of the reducing gas circulating into the internal casing 24.

Compared to classical tuyeres, the injection device 4 according to the invention preferentially does not comprise any cooling mean, which make it lighter and easier to conceive.

The front face 21 may have a circular or, as disclosed in the present set of claims, a triangular shape. The triangular shape has the advantage of decreasing the mechanical load on the front face 21 and making smoother the granular materials flow on the front face 21 in comparison with a traditional circular shape.

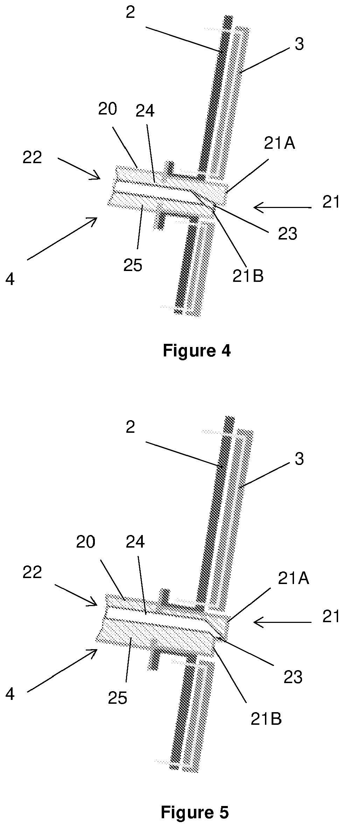

In the embodiment of figure 4, the front face 21 of the injection device 4 comprises two parts, an upper part 21A and a lower part 21B. The lower part 21B is in recess from the upper part 21A and the gas injection outlet 23 is located in the recessed lower part 21B. This allows to create a cavity without material around the gas injection outlet 23 and thus to avoid it becoming dirty and/or being clogged. This improves the lifetime of the injection device 4.

In the embodiment of figure 5, the external casing 20 has the same design as the embodiment of figure 4 but the injection outlet 23 is located at a different location of the lower part 21B.

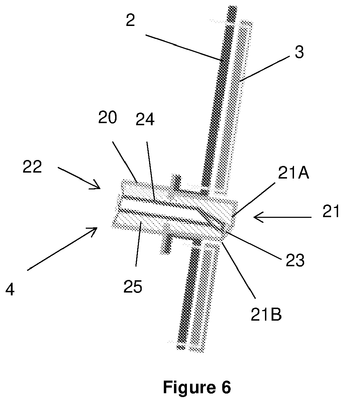

In the embodiment of figure 6, the front face 4 comprises also two parts, an upper part 21A and a lower part 21B. In this embodiment, the lower part 21B is chamfered from the upper part 21A and the gas injection outlet 23 is located in the recessed lower part 21B. As in the previous embodiment this allows to create a cavity without material around the gas injection outlet 23 and thus to avoid it becoming dirty and/or being clogged. This improves the lifetime of the injection device 4.

An injection device 4 according to the invention may further be provided on its front face with a stone box which aims to locally reinforce the external casing 20 and protect it from abrasion by the burden falling into the furnace and thus to improve the lifetime of the injection device 4. This feature may be combined with anyone of the previously described embodiment.

The injection device according to anyone of the previous embodiments is attached to the shell of the blast furnace 1. It may be bolted or welded to this shell.

The injection device according to any of the previous embodiments may be preferentially used for injection of a reducing gas at shaft level in a blast furnace and more specifically in a Top Gas Recycling Blast furnace. This reducing gas contains preferentially between 65%v and 75%v of carbon monoxide CO, between 8%v and 15%v of hydrogen H2, between 1%v and 5%v of carbon dioxide CO2, remainder being mainly nitrogen N2. It is preferentially injected at a temperature comprised between 850 and 1200°C.

## Claims

1. A device (4) to inject a reducing gas into a shaft furnace (1), said device comprising:
a. An external casing (20) having a rear (22) and a front face (21), 1, said front face (21) being provided with an outlet (23) for gas injection into the shaft furnace,
b. An internal casing (24) located inside the external casing (20) and made of a steel able to resist to a temperature up to 1200°C, said internal casing (24) having an opening matching the gas injection outlet (23) of the front face (21) of the external casing, said front face (21) of the external casing (20) having a triangular shape.

2. A device according to claim 1 further comprising a refractory layer (25) located between the external casing (20) and the internal casing (24).

3. A device according to claim 1 wherein the internal steel casing (24) is made of stainless steel.

4. A device according to claim 1 which does not comprise any cooling system.

5. A device according to claim 1 or 2 wherein the shaft furnace is a blast furnace.

6. A device according to anyone of the previous claims wherein said device (4) is bolted to the shaft furnace.

7. A device according to anyone of the previous claims further comprising reinforcing plates to support the internal casing (24).

8. A device according to anyone of the previous claims wherein the internal casing (24) is designed so that injection of the reducing gas inside the shaft furnace is performed downwards.

9. A device according to claim 8 wherein the internal casing (24) is designed so that injection of the reducing gas inside the shaft furnace is performed at an angle α with the perpendicular to the shaft furnace internal wall comprised between 0 and 30°.

10. A device according to anyone of the previous claims further comprising a stone box in the upper part (21A) of the front face.

11. A device according to anyone of the previous claims wherein the front face (21) of the external casing is composed of an upper part (21A) and of a lower part (21B), the lower part (21B) being in recess from the upper part (21A) and the gas injection outlet being provided in the lower part (21B) of the front face.

## Patentansprüche

1. Vorrichtung (4) zum Einblasen von Reduktionsgas in einen Schachtofen (1), wobei die Vorrichtung Folgendes umfasst:
a. ein Außengehäuse (20) mit einer Rück-(22) und einer Vorderseite (21), 1, wobei die Vorderseite (21) mit einem Auslass (23) zum Gaseinblasen in den Schachtofen versehen ist,
b. ein Innengehäuse (24), das sich im Inneren des Außengehäuses (20) befindet und aus einem Stahl besteht, der einer Temperatur bis zu 1200 °C widerstehen kann, wobei das Innengehäuse (24) eine Öffnung aufweist, die zu dem Auslass (23) zum Gaseinblasen in der Vorderseite (21) des externen Gehäuses passt, wobei die Vorderseite (21) des Außengehäuses (20) eine dreieckige Form aufweist.

2. Vorrichtung nach Anspruch 1, ferner eine feuerfeste Schicht (25) umfassend, die sich zwischen dem Außengehäuse (20) und dem Innengehäuse (24) befindet.

3. Vorrichtung nach Anspruch 1, wobei das Stahlinnengehäuse (24) aus Edelstahl besteht.

4. Vorrichtung nach Anspruch 1, die keinerlei Kühlsystem umfasst.

5. Vorrichtung nach Anspruch 1 oder 2, wobei der Schachtofen ein Hochofen ist.

6. Vorrichtung nach einem der vorhergehenden Ansprüche, wobei die Vorrichtung (4) an den Schachtofen geschraubt ist.

7. Vorrichtung nach einem der vorhergehenden Ansprüche, ferner Verstärkungsplatten zum Stützen des Innengehäuses (24) umfassend.

8. Vorrichtung nach einem der vorhergehenden Ansprüche, wobei das Innengehäuse (24) derart gestaltet ist, dass das Einblasen des Reduktionsgases ins Innere des Schachtofens in Abwärtsrichtung durchgeführt wird.

9. Vorrichtung nach Anspruch 8, wobei das Innengehäuse (24) derart gestaltet ist, dass das Einblasen des Reduktionsgases in das Innere des Schachtofens in einem Winkel α zur Senkrechten zur Innenwand des Schachtofens zwischen 0 und 30° durchgeführt wird.

10. Vorrichtung nach einem der vorhergehenden Ansprüche, ferner im oberen Teil (21A) der Vorderseite einen Steinkasten umfassend.

11. Vorrichtung nach einem der vorhergehenden Ansprüche, wobei die Vorderseite (21) des Außengehäuses aus einem oberen Teil (21A) und einem unteren Teil (21B) besteht, wobei der untere Teil (21B) gegenüber dem oberen Teil (21A) zurückgesetzt ist und der Auslass zum Gaseinblasen in dem unteren Teil (21B) der Vorderseite bereitgestellt ist.

## Revendications

1. Dispositif (4) pour injecter un gaz réducteur dans un four à cuve (1), ledit dispositif comprenant :
a. un boîtier externe (20) ayant une face arrière (22) et avant (21), ladite face avant (21) étant pourvue d'un orifice de sortie (23) pour l'injection de gaz dans le four à cuve,
b. un boîtier interne (24) situé à l'intérieur du boîtier externe (20) et constitué d'un acier apte à résister à une température pouvant atteindre 1200 °C, ledit boîtier interne (24) ayant une ouverture correspondant à l'orifice de sortie d'injection de gaz (23) de la face avant (21) du boîtier externe, ladite face avant (21) du boîtier externe (20) ayant une forme triangulaire.

2. Dispositif selon la revendication 1 comprenant en outre une couche réfractaire (25) située entre le boîtier externe (20) et le boîtier interne (24).

3. Dispositif selon la revendication 1 dans lequel le boîtier interne en acier (24) est constitué d'acier inoxydable.

4. Dispositif selon la revendication 1 qui ne comprend pas de système de refroidissement.

5. Dispositif selon la revendication 1 ou 2 dans lequel le four à cuve est un haut-fourneau.

6. Dispositif selon l'une quelconque des revendications précédentes dans lequel ledit dispositif (4) est boulonné sur le four à cuve.

7. Dispositif selon l'une quelconque des revendications précédentes comprenant en outre des plaques de renforcement pour supporter le boîtier interne (24).

8. Dispositif selon l'une quelconque des revendications précédentes dans lequel le boîtier interne (24) est conçu de telle sorte que l'injection du gaz réducteur à l'intérieur du four à cuve est réalisée vers le bas.

9. Dispositif selon la revendication 8 dans lequel le boîtier interne (24) est conçu de telle sorte que l'injection du gaz réducteur à l'intérieur du four à cuve est réalisée à un angle α avec la perpendiculaire à la paroi interne du four à cuve comprise entre 0 et 30 °.

10. Dispositif selon l'une quelconque des revendications précédentes comprenant en outre un dalot en pierre dans la partie supérieure (21A) de la face avant.

11. Dispositif selon l'une quelconque des revendications précédentes dans lequel la face avant (21) du boîtier externe est constituée d'une partie supérieure (21A) et d'une partie inférieure (21B),
la partie inférieure (21B) étant en retrait par rapport à la partie supérieure (21A) et l'orifice de sortie d'injection de gaz étant prévue dans la partie inférieure (21B) de la face avant.
